# EUROPÄISCHE PATENTANMELDUNG

(11) **EP 3 031 653 A1**
(43) Veröffentlichungstag der Anmeldung: **15.06.2016**
(21) Anmeldenummer: 15199480.3
(22) Anmeldetag: 11.12.2015
(51) Int. Cl.: B60K 26/02, F02D 11/02, G05G 1/44, G05G 5/03, G05G 1/30

(54) **PEDALVORRICHTUNG MIT STEUERBARER BETÄTIGUNGSKRAFT**

(30) Priorität: 12.12.2014 DE 102014118573
(71) Anmelder: AB Elektronik GmbH, 59368 Werne (DE)
(72) Erfinder: LAMMERS, Benedikt, 48727 Billerbeck (DE)
(74) Vertreter: Kalkoff & Partner

(57) **Zusammenfassung**

Beschrieben sind eine Pedalvorrichtung 30, 130 und ein Verfahren zur Erzeugung einer ansteuerbaren Gegenkraft hierfür. Ein Pedalelement 12 ist gegenüber einem Basiselement 14 auslenkbar. Ein Drehelement 30, 130 ist mit dem Pedalelement 12 so gekoppelt, dass eine Auslenkung des Pedalelements 12 zu einer Drehung des Drehelements 30, 30 um ein Achselement 31 führt.

Um mittels einer einfachen, kompakten Konstruktion relativ hohe steuerbare Gegenkräfte zu erzielen, umfasst das Drehelement 30, 130 mindestens zwei Teile 32, 34; 132, 134, 136, die um eine Schwenkachse 38 außerhalb des Achselements 31 gegeneinander gelagert sind, so dass das Achselement 31 dazwischen einklemmbar ist. Eine ansteuerbare Krafteinheit 40, 40 wird zum Aufbringen einer Eingriffskraft F_{F} an einem beweglichen Betätiger 42, 142 angesteuert, so dass der Betätiger 42, 142 in Eingriff mit einem der Teile des Drehelements 30, 30 abhängig von der Eingriffskraft F_{F} eine Klemmung des Achselements 31 bewirkt.

## Beschreibung

Die Erfindung betrifft eine Pedalvorrichtung und ein Verfahren zur Erzeugung einer steuerbaren Betätigungskraft einer Pedalvorrichtung.

Herkömmliche Pedalvorrichtungen zur Benutzung in Kraftfahrzeugen umfassen ein mit dem Fuß zu betätigendes Pedalelement, das gegenüber einem Basiselement auslenkbar ist, wobei das Basiselement fest im Fußraum eines Kfz angebracht ist.

Bei der Verwendung als Fahrpedal ("Gaspedal") wird die Pedalstellung, d. h. der Grad der Auslenkung des Pedalelements zur Steuerung der Antriebsleistung des Motors verwendet. Bei heute üblichen elektronischen Steuerungen wird die Pedalstellung durch einen Sensor ermittelt und der Sensorwert durch eine Steuereinheit verarbeitet.

Bei der Betätigung übt der Benutzer mit dem Fuß eine Betätigungskraft auf das Pedalelement aus. Ist diese Kraft hoch genug, um Gegenkräfte, insbesondere Rückstellkräfte und Reibungskräfte zu überwinden, kommt es zur Auslenkung des Pedalelements. Für eine stärkere Auslenkung ist eine höhere Betätigungskraft notwendig.

Herkömmlich ist der Verlauf der Betätigungskraft dabei stetig, meist linear. Es sind auch Konstruktionen bekannt, mit denen im Verlauf der Betätigungskraft Kraftspitzen ("Kickdown") oder Stufen erzeugt werden können.

Der Verlauf der Betätigungskraft kann auch für Signalisierungszwecke genutzt werden, wenn eine Steuerung der Betätigungskraft möglich ist. Hierfür ist eine Vielzahl von Konstruktionen bekannt geworden.

Bspw. zeigt die DE 10 2004 002 114 A1 der Anmelderin eine Fahrpedal-Einheit mit einem Kraftsprung-Element, das in einem Auslösebereich der Auslenkung wirksam wird und hier einen Kraftsprung bewirkt. Eine Kraftsprung-Einheit weist einen Schlitten und eine Antriebshülse auf. Bei Drehung der Antriebshülse mittels eines Elektromotors können verschiedene Positionen des Schlittens angefahren werden, so dass ein Kraftsprung zu verschiedenen Auslenkungspositionen wirksam wird.

In der DE 10 2004 027 610 A1 ist zur Erzeugung einer steuerbaren Gegenkraft ein Motor vorgesehen. Durch eine Freilauf-Kopplungseinrichtung ist eine Ankopplung gegeben, bei der eine Gegenkraft gegen die Bewegung des Pedalelements in Betätigungsrichtung aufgebracht wird, das Pedalelement aber unabhängig von der Antriebseinrichtung entgegen der Betätigungsrichtung zurückstellbar ist.

Auch die DE 10 2004 025 829 A1 beschreibt eine Pedalvorrichtung mit einem Motor. Ein Stößelelement ist zur Kopplung des Motors mit dem Pedalelement vorgesehen. Es ist durch Anlage so gekoppelt, dass es eine Kraft nur entgegen der Betätigungsrichtung übertragen kann.

In der DE 10 2011 075 603 A1 ist eine Fahrpedaleinheit für Kraftfahrzeuge beschrieben, bei der eine Hysterese der Pedalkennlinie durch ein Reibelement erzeugt wird, das schwenkbar um einen Achsbolzen angeordnet ist. Eine zusätzliche Rückstellkraft wird durch einen elektromechanischen Aktuator aufgebracht. Die Reibfläche ist mit der Pedalplatte verbunden, während das Reibelement aus dem Kraftfluss zwischen der Pedalplatte und dem elektromechanischen Aktuator entkoppelt ist. So wird erreicht, dass sich die Kräfte der passiven Pedalkennlinie und des elektromechanischen Aktuators nicht gegenseitig beeinflussen.

In der DE 10 2013 209 370 A1 ist eine Fahrpedaleinheit für Kraftfahrzeuge offenbart. Eine Lageänderung eines Fahrpedals entgegen der Rückstellkraft einer Rückstellfeder führt zu einer Erhöhung der Antriebskraft eines Motors. Eine Reibvorrichtung ist vorgesehen zum Erzeugen einer zusätzlich zur Rückstellkraft wirkenden Reibungskraft. Alternativ kann ein elektromechanischer Hauptaktuator zum Erzeugen einer variabel steuerbaren zusätzlichen Rückstellkraft verwendet werden. In einem Ausführungsbeispiel ist eine Pedalplatte mit einer nockenartigen Kurvenscheibe gekoppelt. Ein elektromechanischer Aktuator greift über ein Stößelelement ebenfalls an der Kurvenscheibe an. Der Stößel liegt an einer Anlagefläche an und kann eine Kraft nur in Richtung der Rückstellung der Pedalplatte erzeugen. Mittels einer Reibvorrichtung mit einem kubusförmigen Eingriffskörper kann an dem Stößelelement eine Reibung erzeugt werden, die in Richtung der Rückstellkraft wirkt. So stehen dank der Federkraft und der Reibungskraft zwei zusätzliche Kraftquellen zur Erzeugung der Rückstellkraft zur Verfügung, um eine Vielzahl von haptischen Rückmeldungen zu erzeugen.

Die DE 10 2005 061 277 A1 beschreibt ein Fahrpedal für ein Kraftfahrzeug. Ein Pedalteil ist um eine Pedal-Schwenkachse gegenüber einem Basisteil schwenkbar angeordnet. Ein Hebelelement ist vorgesehen, das am Basisteil an einem Achsteil um eine Hebel-Schwenkachse schwenkbar gelagert ist. Das Hebelelement ist mit dem Pedalteil so gekoppelt, dass es bei Bewegung des Pedalteils gegenüber dem Basisteil verschwenkt. Dabei kann eine Aufnahmebuchse aus einem ersten und zweiten Buchsenteil gebildet sein, wobei die Buchsenteile gegeneinander verspannt sind und den Achsteil zwischen sich einklemmen. Durch das Einklemmen kann eine Reibung erzeugt und ein gewünschtes Hystereseverhalten erzielt werden.

Es ist Aufgabe der Erfindung, eine Pedalvorrichtung von einfacher Konstruktion und ein Betriebsverfahren hierfür anzugeben, bei denen trotz kompaktem Aufbau eine recht hohe Kraft erreicht werden kann.

Diese Aufgabe wird gelöst durch eine Pedalvorrichtung nach Anspruch 1 und ein Verfahren nach Anspruch 14. Abhängige Ansprüche beziehen sich auf vorteilhafte Ausführungsformen der Erfindung.

Eine erfindungsgemäße Pedalvorrichtung weist zunächst ein Pedalelement auf, das gegenüber einem Basiselement auslenkbar ist. Bei dem Pedalelement kann es sich um eine Pedalplatte, einen Pedalarm oder ein anderes bewegliches Teil handeln. Das Basiselement ist zur festen Anordnung im Kfz vorgesehen. Die Pedalvorrichtung kann als stehendes oder hängendes Pedal ausgebildet sein. Die Auslenkung kann erfolgen innerhalb eines Betätigungsbereiches ausgehend von einer Leerlaufposition, die das Pedalelement ohne Krafteinwirkung einnimmt, bspw. durch Rückstellelemente, bis zu einer Vollbetätigungsposition, für die bevorzugt ein Anschlag vorgesehen ist. Je nach Ausbildung der Pedalvorrichtung kann nahe der Vollbetätigungsstellung ein Kraftspitzen-Element ("Kickdown") vorgesehen sein.

Bei der erfindungsgemäßen Pedalvorrichtung ist ein Drehelement vorgesehen, das mit dem Pedalelement gekoppelt ist. Eine Auslenkung des Pedalelements überträgt sich in eine Drehung des Drehelements. Während dabei eine einseitige Kopplung, bspw. durch einfache Anlage von zwei Anlageflächen möglich ist, ist eine beidseitig wirkende Kopplung bevorzugt, insbesondere über einen mindestens einseitig, bevorzugt beidseitig angelenkten Kopplungshebel.

Das Drehelement ist dabei um ein Achselement drehbar. Das Achselement ist bevorzugt drehfest am Basiselement festgelegt. Es kann bspw. einstückig mit diesem ausgebildet sein, z. B. aus Kunststoff.

Das Drehelement umfasst mindestens zwei Teile, die schwenkbar gegeneinander gelagert sind. Die Schwenkachse liegt dabei außerhalb der Drehachse des Drehelements und das Achselement ist zwischen mindestens zweien der Teile des Drehelements einklemmbar. Die Schwenkachse liegt bevorzugt parallel zur Drehachse im Abstand hierzu. Bevorzugt ist der Abstand so groß, dass die Schwenkachse außerhalb des Achselements liegt. Bspw. können die Teile des Drehelements eine Art Zange bilden, die um die außerhalb des Achselements gelegene Schwenkachse schwenkend öffnen bzw. schließen kann.

Während die beiden Teile des Drehelements bevorzugt separate Bauteile sind, kann ein bspw. zweiteiliges Drehelement im Prinzip auch einstückig gebildet sein, sofern eine Verbindung zweier Teile davon ausreichend flexibel gestaltet ist, dass eine Schwenkbarkeit um die Schwenkachse ermöglicht und so eine Einklemmwirkung erreicht wird. Dabei ist die Passung zwischen den Teilen des Drehelements und dem Achselement, wie unten im Zusammenhang mit bevorzugten Ausführungsformen erläutert wird, bevorzugt so knapp, dass die tatsächliche Schwenkbewegung nur minimal sein wird, bspw. um einen Winkelbetrag von wenigen Grad oder sogar weniger als ein Grad. Maßgeblich ist dabei aber die Kraftwirkung auf das Achselement, das zwischen den Teilen eingeklemmt wird, wenn auf diese eine Kraft in geeigneter Richtung, d. h. bei einer zangenförmigen Konstruktion in Richtung einer Schließbewegung der Zange wirkt.

Durch eine solche Klemmung des Achselements zwischen Teilen des Drehelements kann eine Reibungswirkung erzielt werden, die der Drehbewegung des Drehelements um das Achselement herum entgegenwirkt. Insbesondere bei ausreichend großer Dimensionierung des Achselements mit einem Durchmesser von bspw. 1-5 cm, bevorzugt 2-4 cm steht eine ausreichend große Umfangsfläche für die Reibpaarung zur Verfügung.

Die so erzielbare Reibwirkung hängt ab von einer Kraft, die auf die Teile des Drehelements wirkt. Dies wird erfindungsgemäß ausgenutzt, um mit einer ansteuerbaren Krafteinheit die für die weitere Auslenkung des Pedalelements erforderliche Betätigungskraft gezielt zu beeinflussen.

Die erfindungsgemäß ansteuerbare Krafteinheit kann entsprechend einer Ansteuerung eine Kraftwirkung vorgeben. Die ansteuerbare Krafteinheit kann dabei insbesondere ein elektromechanisches Aktorelement umfassen, bspw. einen Elektromotor, Solenoid oder Hubmagneten etc. Diese Aktorelemente sind durch ein elektrisches Signal ansteuerbar. Die ansteuerbare Krafteinheit kann weiter mechanische Elemente umfassen wie bspw. Magnete, Federn oder andere Kraftelemente und Hebel, Getriebe oder andere Übertragungselemente. Besonders vorteilhafte Ausführungsformen sind unten beschrieben.

Unabhängig von der Art und Beschaffenheit der jeweils verwendeten ansteuerbaren Krafteinheit wird jedenfalls eine Eingriffskraft an einem beweglichen Betätiger wirksam. Der Betätiger kann in Eingriff mit einem der Teile des Drehelements gebracht werden. Befinden sich der Betätiger und das Drehelement im Eingriff, kann die Eingriffskraft vom Betätiger so auf den Teil des Drehelements einwirken, dass eine davon abhängige Klemmung des Achselements bewirkt wird.

Eine wesentliche Wirkung der Eingriffskraft ist somit nicht zwangsläufig die direkte Erzeugung einer Kraft bzw. eines Drehmoments am Drehelement (obwohl dies zusätzlich erfolgen kann), sondern die Eingriffskraft bewirkt abhängig vom Betrag und ggfs. der Richtung eine variable Klemmung des Achselements. Bspw. kann der Betätiger mit einem der Teile des Drehelements in Eingriff gebracht werden und dieses mit der Eingriffskraft so beaufschlagen, dass die Klemmung des Achselements zwischen zwei Teilen des Drehelements erhöht wird.

Die Einwirkung auf die Kraftverhältnisse bei der Betätigung des Pedalelements erfolgt somit mindestens zum Teil indirekt über die Reibungswirkung. Die Eingriffskraft kann genutzt werden, um durch Klemmung für eine deutlich schwergängigere Betätigung des Pedalelements zu sorgen. So wird die notwendige Betätigungskraft erhöht. In der Pedalkennlinie, d. h. dem Verlauf der jeweils benötigten Betätigungskraft in Abhängigkeit von der Auslenkung des Pedalelements bewirkt dies einen Anstieg. Je nach Ausgestaltung kann der Anstieg verschiedene Verläufe haben, insbesondere kann sich die Steigerung der Pedalkennlinie ändern. Bevorzugt ist die Ausbildung einer Kraftstufe, die deutlich spürbar ist und gut zur Signalisierung verwendet werden kann.

Der Eingriff zwischen dem beweglichen Betätiger und mindestens einem der Teile des Drehelements kann dabei je nach Ausführung und gewünschter Kraftwirkung stets bei einer festen Auslenkungsposition oder an verschiedenen, durch Ansteuerung vorgebbaren Auslenkungspositionen wirksam werden. Dabei wird unter einem Eingriff nur eine Kraftübertragung der Eingriffskraft verstanden, während ein reiner kraftloser Kontakt bzw. ein Kontakt mit einer sehr geringen Kraftwirkung, die nicht zu einer für den Benutzer spürbaren Änderung der Pedalkennlinie führt, keinen Eingriff darstellt.

Bei geeigneter Konstruktion kann, wie nachfolgend noch näher ersichtlich wird, so eine insgesamt erhöhte Kraftwirkung erzielt werden. So kann das für die weitere Betätigung notwendige Drehmoment bzw. die entsprechende Betätigungskraft höher sein als die von der Krafteinheit aufgebrachte Eingriffskraft bzw. ein direkt hiermit erzielbares Drehmoment.

Dies gilt insbesondere dann, wenn das Drehelement zwei Teile umfasst, von dem ein erster Teil mit dem Pedalelement gekoppelt ist und ein zweiter Teil mit dem Betätiger in Eingriff gebracht werden kann. Sowohl die vom Benutzer für eine weitere Auslenkung aufzubringende Betätigungskraft als auch die Eingriffskraft können bei gegenläufiger Ausrichtung jeweils eine stärkere Klemmung am Achselement bewirken und sorgen so für eine entsprechend schwergängige Betätigung des Drehelements. Der weiteren Auslenkung in Betätigungsrichtung wirkt somit eine erheblich erhöhte Gegenkraft entgegen. Dies gilt allerdings nicht für eine nachlassende Betätigung, weil dann durch die Entlastung des mit dem Pedalelement gekoppelten Teil des Drehelements die Klemmwirkung ganz oder zum Teil aufgehoben werden kann.

Somit ist eine erfindungsgemäße Pedalvorrichtung sehr gut geeignet, um relativ hohe Kräfte zu erzielen. Dabei kann die ansteuerbare Krafteinheit, wie in den Beispielen gezeigt, weiter sehr kompakt aufgebaut sein. Insbesondere können elektromechanische Aktorelemente mit vergleichsweise geringen Leistungen verwendet werden, weil durch die variable Klemmwirkung und daraus resultierende hohe Reibungskräfte schon relativ geringe Eingriffskräfte zu für den Benutzer spürbaren Änderungen der Pedalkennlinie (Verlauf der notwendigen Betätigungskraft über die Auslenkung) führen.

Bei dem erfindungsgemäßen Verfahren erfolgt eine Ansteuerung der Krafteinheit zum Aufbringen der Eingriffskraft. Dies kann durch geeignete Ansteuerung, bspw. eines elektromechanischen Aktorelements erfolgen, bspw. an/aus, oder in mehreren Stufen, oder kontinuierlich zur Vorgabe verschiedener Werte der Eingriffskraft.

Gemäß einer Weiterbildung der Erfindung kann das Pedalelement über einen Hebel mit einem ersten Teil des Drehelements gekoppelt sein. Bevorzugt ist ein Pedalsensor vorgesehen, um die Stellung des ersten Teils des Drehelements zu ermitteln. Das so ermittelte Sensorsignal, das die Stellung des ersten Teils des Drehelements wiedergibt, kann bevorzugt als Sensorwert für die Pedalposition, d. h. für den Grad der Auslenkung verwendet und bspw. durch die elektronische Steuerung (ECU) eines Kfz verarbeitet werden.

Gemäß einer Weiterbildung weist ein Teil des Drehelements einen Hebel zur Aufnahme der Eingriffskraft auf. Dieser Hebel erstreckt sich bevorzugt radial vom Achselement. Zur Erzielung einer vergrößerten Kraftwirkung ist bevorzugt, dass von der Drehachse des Drehelements aus gesehen die Länge des Hebels zur Aufnahme der Eingriffskraft größer ist als der Abstand zur Schwenkachse.

Die ansteuerbare Krafteinheit kann, wie bereits beschrieben, verschiedene Typen von Aktorelementen, insbesondere elektromechanische Aktorelemente aufweisen. Ein elektromechanisches Aktorelement kann durch elektrische Ansteuerung mindestens betreibbar sein in einem ersten Zustand, in dem die Eingriffskraft am Drehelement wirksam wird und einem zweiten Zustand, in dem die Eingriffskraft nicht auf das Drehelement wirkt. Besonders einfach kann dies, wie nachstehend im Zusammenhang mit bevorzugten Ausführungsformen deutlich wird, mittels eines Hubmagneten erreicht werden, der in einem bestromten und einem unbestromten Zustand zu einer unterschiedlichen Einwirkung der Eingriffskraft führt, bspw. im ersten Zustand bestromt wird und im zweiten Zustand unbestromt bzw. mit geringerem Strom betrieben wird.

Die auf das Drehelement einwirkende Eingriffskraft kann je nach Ausführung direkt von einem Aktorelement, bspw. elektromechanischem Aktorelement aufgebracht werden. Gemäß einer Weiterbildung der Erfindung ist allerdings vorgesehen, dass die Eingriffskraft mittels einer Eingriffsfeder aufgebracht wird. Das ansteuerbare Aktorelement kann dann bspw. je nach Betriebsart zur Zu- bzw. Abschaltung der Kraftwirkung der Eingriffsfeder benutzt werden.

In einer bevorzugten Ausführungsform weist das Kraftelement ein Stößelelement auf, das bevorzugt linear, weiter bevorzugt in seiner Längsrichtung, verschiebbar ist. Das Stößelelement kann somit als beweglicher Betätiger dienen und mit einem Teil des Drehelements in Eingriff treten. Insbesondere kann der Eingriff so gestaltet werden, dass es an einer Eingriffsposition zu einem Kontakt kommt und ab der Eingriffsposition eine weitere Betätigung des Pedalelements zu einer Verschiebung des Stößelelements führt.

Dabei kann besonders bevorzugt sein, wenn das Stößelelement mit einem ansteuerbaren Aktorelement so gekoppelt ist, dass durch eine Ansteuerung des Aktorelements eine zur Verschiebung des Stößelelements notwendige Kraft variiert werden kann. Dies kann bspw. erfolgen durch eine je nach Ansteuerung des Aktorelements wirksame Federkraft, bspw. eine Eingriffsfeder. Die Eingriffsfeder kann bspw. um das Stößelelement herum oder in dessen Verlängerung angeordnet sein und eine Federkraft entgegen der Verschiebung des Stößelelements aufbringen. Als Gegenlager der Feder kann ein durch ein Aktorelement beaufschlagtes Teil wirken. Bspw. kann ein durch einen Elektromagneten je nach Betriebsart entweder fixiertes oder freigegebenes Gegenlager für die Eingriffsfeder vorgesehen sein.

Gemäß einer alternativen Ausführungsform kann die Krafteinheit einen Hebel aufweisen. Der Hebel kann bspw. als Schwenkhebel vorgesehen sein. Durch ein ansteuerbares Aktorelement kann der Hebel zu einem Eingriff mit einem Teil des Drehelements beaufschlagt werden. Ein solcher Hebel kann bspw. durch Hebelwirkung die Kraftwirkung des Aktorelements verstärken, insbesondere wenn der Hebelarm zum Eingriff mit dem Drehelement kürzer ist, als der Hebelarm zur Beaufschlagung durch das Aktorelement. Der Eingriff von Hebel und Drehelement kann formschlüssig sein. Um allerdings eine Beeinflussung der Pedalkennlinie an nicht nur einer festen Auslenkposition, sondern an verschiedenen Positionen zu ermöglichen, ist ein reibschlüssiger Eingriff zwischen dem Hebel und dem Drehelement bevorzugt.

Ein Eingriff zwischen dem Hebel und dem Drehelement findet bevorzugt an einer Fläche statt. Mit steigender Auslenkung des Pedalelements kann der Eingriff an verschiedenen Stellen einer hierfür vorgesehenen Fläche am Hebel erfolgen. Wird bei bestehendem Eingriff mit dem Hebel die Betätigung erhöht, so kann ein Eingriffsteil des Drehelements entlang einer Fläche des Hebels verschoben werden. Durch geeignete Wahl des Flächenverlaufs sowie der beteiligten Materialien kann dabei eine gewünschte Kraftwirkung erzielt werden.

In einer Ausführungsform kann die Krafteinheit eine Reibfläche zum reibschlüssigen Eingriff mit einem Teil des Drehelements aufweisen. Die Reibfläche kann glatt und bspw. gekrümmt, bevorzugt teilzylindrisch ausgebildet sein, so dass bei der weiteren Betätigung gegen die von der Eingriffskraft hervorgerufene Gegenkraft das den Eingriff bildende Teil des Drehelements entlang der Reibfläche und in Kontakt mit dieser verschoben wird. Statt einer glatten Reibfläche mit einer Krümmung, die exakt der Drehbewegung des Drehelements entspricht, kann auch ein abweichender Verlauf der Kontaktfläche vorgegeben sein, um verschiedene Kraftwirkungen zu erzeugen. Bspw. kann die Kontaktfläche Erhöhungen oder Vertiefungen aufweisen, die bei einer Bewegung des den Eingriff bildenden Teils des Drehelements hierüber zu entsprechenden Kraftwirkungen führen. So kann eine Erhebung bspw. zu einer Kraftspitze nach Art eines Kickdown führen, wobei die für die Überwindung der Erhebung notwendige Kraft deutlich erhöht ist und nach Überwindung der Erhebung die weitere Betätigungskraft zunächst geringer bleibt.

Gemäß einer bevorzugten Weiterbildung der Erfindung umfasst das Drehelement nicht lediglich zwei, sondern mindestens drei Teile. Jedes der Teile kann dabei so ausgebildet sein, dass es das Achselement jeweils mindestens teilweise umgreift. Die Teile können um eine Schwenkachse außerhalb des Drehelements gegeneinander gelagert sein. Besonders bevorzugt ist eine Konstruktion, bei der ein erster Teil des Drehelements mit dem Pedalelement gekoppelt ist, ein zweiter Teil mit einer Rückstellkraftfeder und ein dritter Teil einen Hebel zum Eingriff mit der Krafteinheit aufweist.

Der dritte Teil ist bevorzugt an der Schwenkachse gegenüber dem ersten Teil gelagert. Weiter bevorzugt ist am dritten Teil eine Positionsrückstellfeder vorgesehen.

Eine solche Konstruktion mit mindestens drei Teilen des Drehelements hat sich als besonders geeignet erwiesen, um eine Beeinflussung der Pedalkennlinie an nicht nur einer, sondern verschiedenen Positionen zu ermöglichen. Während ein Drehelement auch aus zwei Teilen gebildet werden kann, insbesondere dem oben genannten ersten und dritten Teil, und eine Rückstellkraftfeder an einem dieser Teile angreifen kann, ermöglicht die bevorzugte Konstruktion mit drei Teilen einen besonders sicheren Betrieb. Dabei können der erste und zweite Teil gegeneinander gelagert sein, so dass bereits durch die Wirkung der Rückstellkraftfeder auf den zweiten Teil bei Einwirkung einer Betätigungskraft vom Pedalelement auf den ersten Teil eine gewisse Klemmwirkung erzielt wird. Diese Klemmwirkung kann nun durch die Eingriffskraft gezielt variiert werden, die über den dritten Teil einwirkt und zu einer entsprechenden Verstärkung der Klemmwirkung führen kann.

Dabei kann die Konstruktion mit einem unabhängig von den anderen Teilen beweglichen dritten Teil zu einer Kopplung genutzt werden, bei der eine Kraftübertragung von der Krafteinheit nur entgegen der Betätigungsrichtung ermöglicht wird. Selbst bei einer Fehlfunktion der Krafteinheit könnte so eine ordnungsgemäße Rückstellung mittels des ersten und zweiten Teils des Drehelements erfolgen, so dass das Pedal auch im Fehlerfall nicht in einer Betätigungsposition niedergehalten werden kann.

Nachfolgend werden Ausführungsformen der Erfindung anhand von Zeichnungen näher beschrieben. In den Zeichnungen zeigen:
- Fig. 1: eine teilweise schematische Seitenansicht einer ersten Ausführungsform einer Pedalvorrichtung;
- Fig. 2: in perspektivischer Darstellung ein Drehelement und eine Krafteinheit der Pedalvorrichtung aus Fig. 1;
- Fig. 3: in perspektivischer Darstellung eine Explosionsdarstellung des Drehelements aus Fig. 2;
- Fig. 4: das Drehelement aus Fig. 2, Fig. 3 in einer Längsschnittdarstellung;
- Fig. 5a - 5c: die Krafteinheit aus Fig. 2 in verschiedenen Stellungen;
- Fig. 6: in Diagrammform eine Pedalkennlinie der ersten Ausführungsform gemäß Fig. 1;
- Fig. 7: in teilweise schematischer Darstellung eine zweite Ausführungsform einer Pedalvorrichtung;
- Fig. 8: in teilweise schematischer Seitenansicht ein Teil der Pedalvorrichtung aus Fig. 7 in verschiedenen Stellungen;
- Fig. 9: in perspektivischer Ansicht ein Drehelement der Pedalvorrichtung aus Fig. 7, Fig. 8;
- Fig. 10: in perspektivischer Ansicht ein Teil des Drehelements aus Fig. 9 mit einem Teil einer Krafteinheit;
- Fig..11: das Drehelement aus Fig. 9 in Längsschnitt-Darstellung;
- Fig. 12: in perspektivischer Ansicht eine Explosionsdarstellung des Drehelements aus Fig. 9, Fig. 11;
- Fig. 13a, 13b: in Diagrammform zwei verschiedene Verläufe von Pedalkennlinien der Pedalvorrichtung aus Fig. 7.

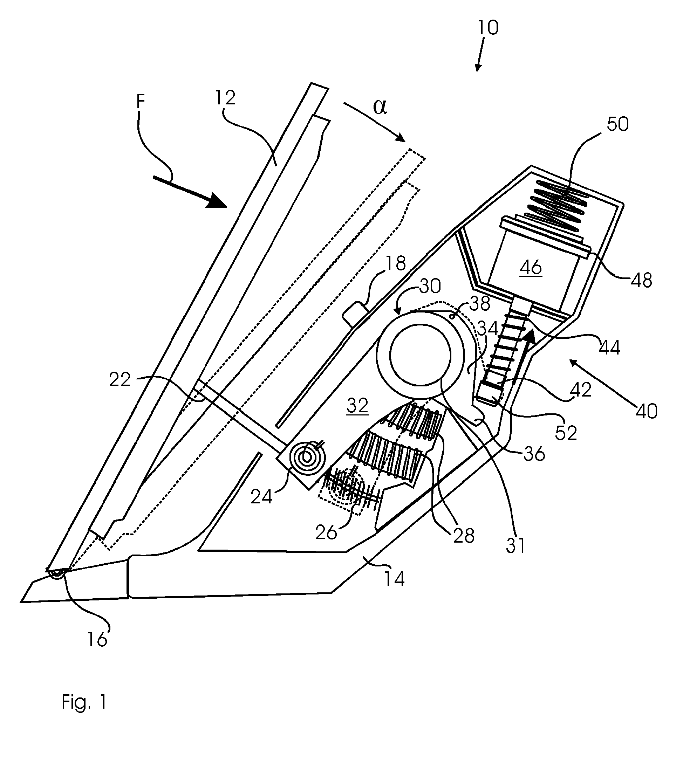

Eine in Fig. 1 dargestellte Pedalvorrichtung 10 stellt ein Fahrpedal (Gaspedal) für ein Kfz in der Bauform eines stehenden Pedals dar.

Eine Pedalplatte (Pedalelement) 12 ist an einem Gehäuse (Basiselement) 14 mittels eines Scharniers 16 angelenkt. Die Pedalplatte 12 ist in einer in Fig. 1 durch einen Pfeil gezeigten Betätigungsrichtung verstellbar durch Einwirkung einer Betätigungskraft F. Entsprechend dem Kraftbetrag F ergibt sich eine Auslenkung α zwischen einer Leerlaufstellung αₒ, die die Pedalplatte ohne Krafteinwirkung einnimmt und einer Vollbetätigungsstellung αₘₐₓ, die durch einen Anschlag 18 vorgegeben ist.

Innerhalb des Gehäuses 14 ist ein Drehhebel (Drehelement) 30 angeordnet, der über einen beidseitig angelenkten Kopplungshebel 22 mit der Pedalplatte 12 so gekoppelt ist, dass sich entsprechend der Betätigung α der Pedalplatte 12 eine fest zugeordnete Drehstellung des Drehhebels 30 ergibt. Der Drehhebel 30 ist um eine fest am Gehäuse 14 angeordnete Achse 31 drehbar.

Für die Betätigungsstellung α der Pedalplatte 12 ist ein Sensor vorgesehen mit zwei Sensorteilen 24, 26, deren Stellung relativ zueinander ermittelt und zu einem Sensorsignal verarbeitet wird. Im dargestellten bevorzugten Beispiel handelt es sich um einen Sensor nach induktivem Prinzip. Am Drehhebel 30 ist ein induktives Koppelelement 24 vorgesehen, das je nach Drehstellung des Drehhebels 30 eine unterschiedliche Position gegenüber einem Spulenschaltkreis 26 einnimmt. Durch geeignete Bestromung des Spulenschaltkreises 26 mittels einer Anregungs- und Auswertungsschaltung (nicht dargestellt) kann eine variable Überkopplung eines Signals durch das induktive Koppelelement 24 ermittelt und hieraus dessen Position abgeleitet werden.

Auf den Drehhebel 30 wirken zwei Rückstellfedern 28. Die Rückstellfedern 28 wirken der Betätigung der Pedalplatte 12 entgegen und stellen diese in die Grundstellung zurück.

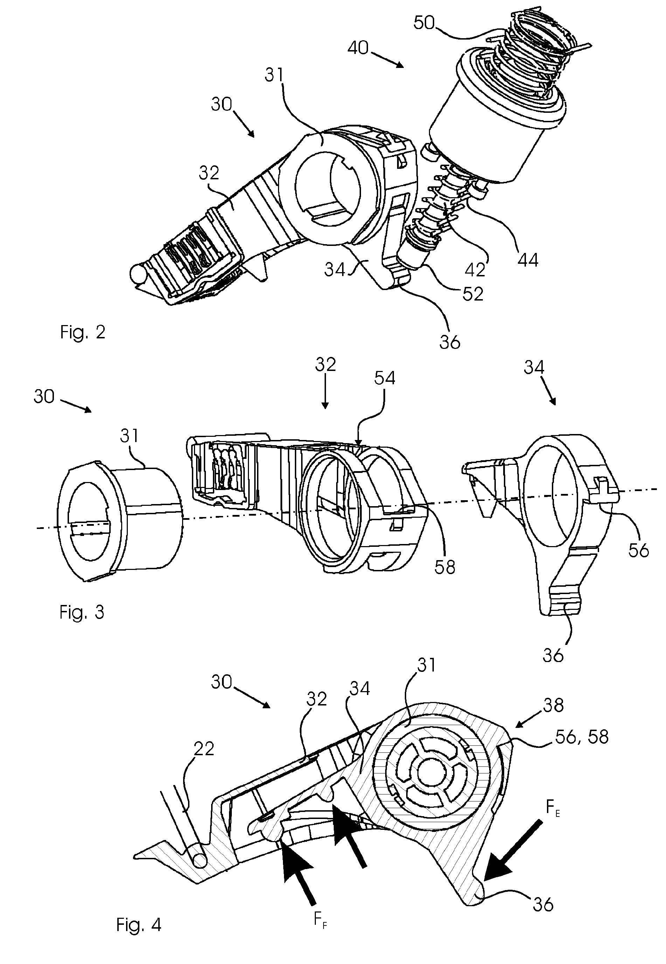

Der Drehhebel 30 umfasst im gezeigten Beispiel zwei Teile, nämlich einen Betätigungshebel 32 und einen Krafthebel 34. Der Betätigungshebel 32 und der Krafthebel 34 umgreifen, wie insbesondere aus Fig. 3 ersichtlich, jeweils die Achse 31. Sie sind an einer in Fig. 1 zunächst nur schematisch gezeigten Schwenklagerung 38 gegeneinander schwenkbar gelagert, so dass sie die Achse 31 zwischen sich einklemmen können. Die spezielle Ausbildung der Teile 32, 34 des Drehhebels 30 und die Schwenklagerung sind in Fig. 2-4 gezeigt und werden nachfolgend näher erläutert.

Der Betätigungshebel 32 ist über den Kopplungshebel 22 direkt mit der Pedalplatte 12 verbunden, so dass die Stellung des Betätigungshebels 32 stets der Auslenkung α der Pedalplatte 12 entspricht. Am Betätigungshebel 32 ist auch das Sensorelement 24 angebracht, so dass der Sensor 24, 26 stets die Position des Betätigungshebels 32 und somit die aktuelle Betätigungsstellung α der Pedalplatte 12 liefert.

Der Krafthebel 34 sorgt für die Bewegungskräfte. Die Rückstellfedern 28 greifen am Krafthebel 34 an (in Fig. 1 nicht dargestellt). So wird einerseits über den Krafthebel 34 die

Rückstellkraft auf den Drehhebel 30 aufgebracht. Andererseits sorgt der Krafthebel 34, wie nachfolgend näher gezeigt wird, für eine Einklemmung der Achse 31 und somit zur Erzeugung von Reibungskräften.

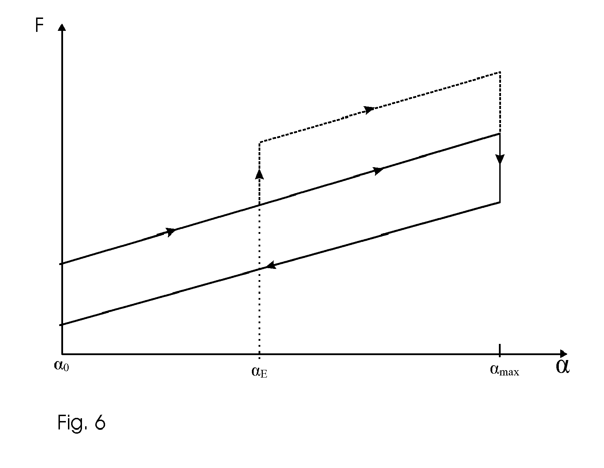

In Fig. 6 ist beispielhaft eine Kennlinie, d. h. der Verlauf der Betätigungskraft F über die Auslenkung α der Pedalvorrichtung 10 dargestellt. Wird zunächst eine passive Kennlinie ohne gesteuerte Kraftwirkung betrachtet (dargestellt als durchgezogene Linie), steigt ausgehend von der Grundstellung α₀ durch die Wirkung der Rückstellfedern 28 und die Reibung an der Achse 31 die benötigte Betätigungskraft F mit steigender Auslenkung α an, im gezeigten Beispiel etwa linear. Bei nachlassender Betätigung (unterer Teil der in Fig. 6 dargestellten Kurve) ergibt sich aber durch die Reibung ein geringerer Kraftbetrag F, also eine für den Bedienkomfort gewünschte Hysterese.

Die Pedalvorrichtung 10 umfasst wie in Fig. 1 gezeigt eine ansteuerbare Kraftvorrichtung 40, mit der die Pedalkennlinie (Fig. 6) aktiv verändert werden kann, so dass sie bspw. den gestrichelt dargestellten Verlauf nimmt. Die Krafteinheit 40 umfasst ein Stößelelement 42 mit einer Eingriffsfeder 44, einen Hubmagneten 46 mit einer ferromagnetischen Scheibe 48 und eine Andruckfeder 50.

Der Krafthebel 34 des Drehhebels 30 bildet eine Nase 36 aus, die mit einer Spitze 52 des Stößels 42 in Eingriff treten kann. Somit wirkt der Krafthebel 34 auch als Eingriffshebel. Ab einer Eingriffsposition α_{E} zwischen der Nase 36 und der Spitze 52 des Stößels 42 erfordert eine weitere Erhöhung der Betätigung a dann, dass der Stößel 42 in der in Fig. 1 gezeigten Pfeilrichtung verschoben wird. Hierdurch kann die Pedalkennlinie verändert werden.

In Fig. 2 sind der Drehhebel 30 und die Krafteinheit 40 in einer perspektivischen Darstellung gezeigt. Dort ist ersichtlich, wie sich der Drehhebel 30 bei Drehung um die Achse 31 ab einer Eingriffsposition, die einer Betätigungsposition α_{E} entspricht mit der Krafteinheit 40 in Eingriff tritt. Die Achse 31 ist in diesem Fall als Hülse ausgebildet, die wie in Fig. 4 gezeigt drehfest an einem inneren, einstückig mit dem Gehäuse 14 ausgebildeten Achsträger festgelegt ist.

Fig. 3 zeigt den Aufbau des Drehhebels 30 aus dem Betätigungshebel 32 und dem Krafthebel 34, die jeweils die Achse bzw. Hülse 31 umgreifen. Der Krafthebel 34 ist dabei in einer Aussparung 54 des Betätigungshebels 32 aufgenommen.

Zwischen dem Betätigungshebel 32 und dem Krafthebel 34 ist eine Schwenklagerung gebildet durch Anlage einer Anlagekante 56 des Krafthebels 34 an einer entgegengesetzten Anlagekante 58 des Betätigungshebels 32. In der Montageposition liegen die Anlagekanten 56, 58 wie in Fig. 4 gezeigt aufeinander und bilden so die Schwenklagerung 38.

Auf den Krafthebel 34 und den Betätigungshebel 32 wirken dabei gegensätzliche Kräfte. Über den angelenkten Kopplungshebel 22 wirkt die von der Pedalplatte 12 übertragene Betätigungskraft in Richtung einer Drehung gegen den Uhrzeigersinn in Fig. 4. Federkräfte F_{F} der Rückstellfedern 28 wirken entgegengesetzt auf den Krafthebel 34 in Richtung einer Drehung im Uhrzeigersinn in Fig. 4. Die Hebel 32, 34 werden so in einer Schwenkbewegung um die Schwenklagerung 38 herum gegeneinander verspannt. Da sie allerdings in enger Passung um die die Achse 31 bildende Hülse herum angeordnet sind, kommt es nicht bzw. nur in minimalen Maße zu einer Schwenkbewegung. Stattdessen ergibt sich eine Klemmung der Hülse 31 zwischen den Hebeln 32, 34. Die dort wirkenden Klemmkräfte sind abhängig von den gegensätzlich wirkenden Kräften auf die Hebel 32, 34.

Durch die Klemmung kommt es wie oben beschrieben zu einer erhöhten Reibung bei einer Drehbewegung des Drehhebels 30 um die Achse 31, was zu der in Fig. 6 dargestellten Bewegungshysterese führt.

Derselbe Effekt wird auch für die Krafteinleitung durch die Krafteinheit 40 genutzt. Diese erfolgt wie beschrieben bei einem Eingriff zwischen der Nase 36 des Krafthebels 34 mit der Spitze 52 des Stößels 42. Hierdurch wirkt auf die Nase 36 die Eingriffskraft F_{E}. Ebenso wie die Federkraft F_{F} beaufschlagt sie den Krafthebel 34, der in diesem Fall als Eingriffshebel wirkt, zu einer Drehung im Uhrzeigersinn in Fig. 4, d. h. entgegen der Betätigungsrichtung.

Durch die Wirkung der Eingriffskraft F_{E} erfolgt einerseits eine direkte Erhöhung der Gegenkraft an der Pedalplatte 12, weil die Eingriffskraft F_{E} über den Eingriffshebel 34 den Drehhebel 30 mit einem Drehmoment beaufschlagt. Zusätzlich erhöht sich die Klemmung an der Achse 31, weil die Eingriffskraft F_{E} die gegensätzlichen Kräfte der Hebel 32, 34 erhöht. Durch die Zusammenwirkung dieser beiden Effekte ist für eine Erhöhung der Betätigung α entgegen der Eingriffskraft F_{E} ein relativ hoher Kraftaufwand notwendig, mit dem die Summe aus Federkraft F_{F}, Eingriffskraft F_{E} und der Kraft zur Drehung entgegen der erhöhten Reibung überwunden werden müssen.

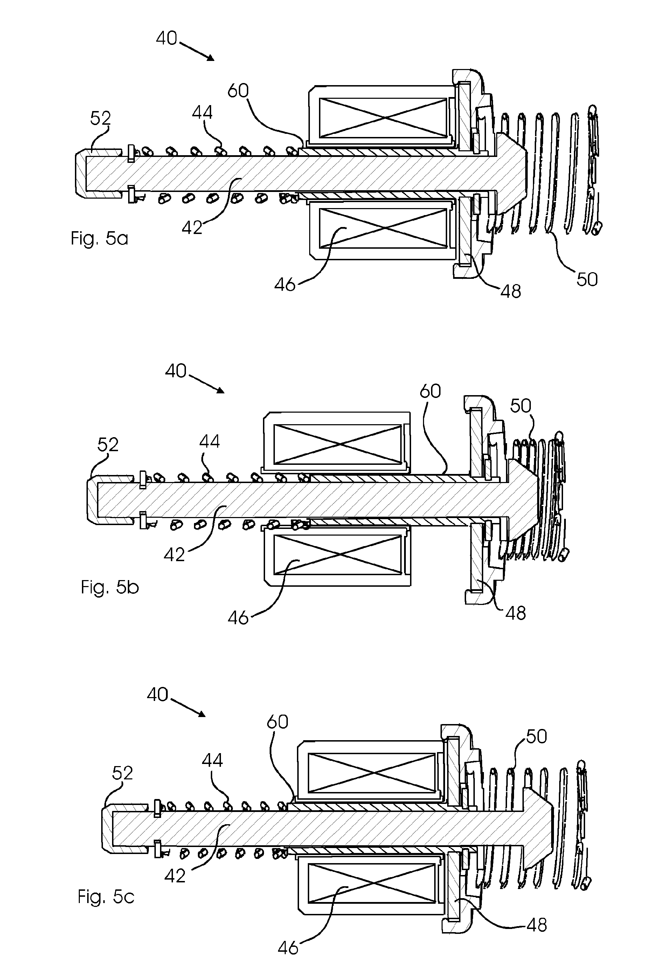

Die durch die Krafteinheit 40 aufgebrachte Eingriffskraft F_{E} ist dabei durch eine Ansteuerung des Hubmagneten 46 steuerbar. In Fig. 5a - 5c ist in Schnittansichten verschiedener Stellungen der Aufbau der Krafteinheit 40 dargestellt.

Wie in Fig. 5a - 5c gezeigt durchdringt der Stößel 42 den Hubmagneten 46. Die Eingriffsfeder 44 liegt an einer Hülse 60 an, die den Stößel 42 umgibt.

Eine ferromagnetische Scheibe 48 ist ebenfalls um den Stößel 42 herum angeordnet und liegt auf der Hülse 60 auf. Die Scheibe 48 bildet zusammen mit der Hülse 60 das Gegenlager für die Eingriffsfeder 44, die am anderen Ende am Stößel 42 festgelegt ist.

Die Andruckfeder 50 wirkt auf die Scheibe 48 mit relativ geringer Federkraft und stellt so in der Ruheposition deren Anlage am Hubmagneten 46 sicher. Fig. 5a zeigt eine Ruhestellung der Krafteinheit 40.

Kommt es nun bei Auslenkung der Pedalplatte 12 über die Pedalstellung α_{E} hinaus zu einem Eingriff der Spitze 52 des Stößels 42 mit der Nase 36 des Krafthebels 34, so verschiebt sich der Stößel 42 wie in Fig. 5b gezeigt. Falls der Hubmagnet 46 unbestromt ist, kann sich die Scheibe 48 leicht abheben. Die Eingriffsfeder 44 steht unter Vorspannung und ist erheblich härter als die Andruckfeder 50. Somit verschiebt sich der Stößel 42 unter nur sehr geringer, nämlich durch die Andruckfeder 50 aufgebrachter Kraftwirkung wie aus Fig. 5b ersichtlich, indem die Eingriffsfeder 44 über die Hülse 60 die Scheibe 48 verschiebt.

Im bestromten Zustand des Hubmagneten 46 hingegen ist wie in Fig. 5c gezeigt die Scheibe 48 am Hubmagneten 46 festgelegt. In diesem Fall ist die gezeigte Verschiebung des Stößels 42 in seiner Längsrichtung nur unter erheblicher Kraftwirkung möglich. Die Scheibe 48 bildet über die Hülse 60 ein feststehendes Gegenlager für die Eingriffsfeder 46, so dass diese für die dargestellte Verschiebung des Stößels 42 zusammengedrückt werden muss. Der Stößel 42 verschiebt sich dann durch das Innere des Hubmagneten 46 und die Scheibe 48 hindurch, wobei sein Kopf in das Innere der Andruckfeder 50 eintaucht.

Somit wird je nach Bestromung des Hubmagneten 46 ab dem Eingriff zwischen der Nase 36 des Krafthebels 34 und dem Stößel 42 eine sehr unterschiedliche Kraftwirkung erzielt. Bei unbestromten Magneten wirkt nur die sehr geringe Kraft der Andruckfeder 50, die im Vergleich mit der deutlich höheren Federkraft F_{F} der Rückstellfedern 28 vernachlässigbar klein ist. Wie in Fig. 6 als durchgezogene Linie dargestellt verläuft die Pedalkennlinie also bei unbestromten Hubmagneten 46 im Wesentlichen auch nach der Eingriffsstelle α_{E} ohne für den Fahrer spürbare Änderung weiter.

Ist der Hubmagnet 46 hingegen bestromt, erhöht sich wie in Fig. 6 mit der gestrichelten Kennlinie dargestellt ab der Eingriffsstelle α_{E} die für die weitere Betätigung benötigte Kraft F erheblich, da die durch die Eingriffsfeder 44 aufgebrachte Eingriffskraft F_{E} und die dadurch zusätzlich erhöhte Reibwirkung überwunden werden müssen. Es bildet sich die in Fig. 6 dargestellte Kraftstufe im Verlauf der Pedalkennlinie aus, die zur Signalisierung genutzt werden kann.

So kann mit einem Hubmagneten 46 von relativ geringer elektrischer Leistung und relativ kleinen Abmessungen eine erhebliche Kraftwirkung erzielt werden.

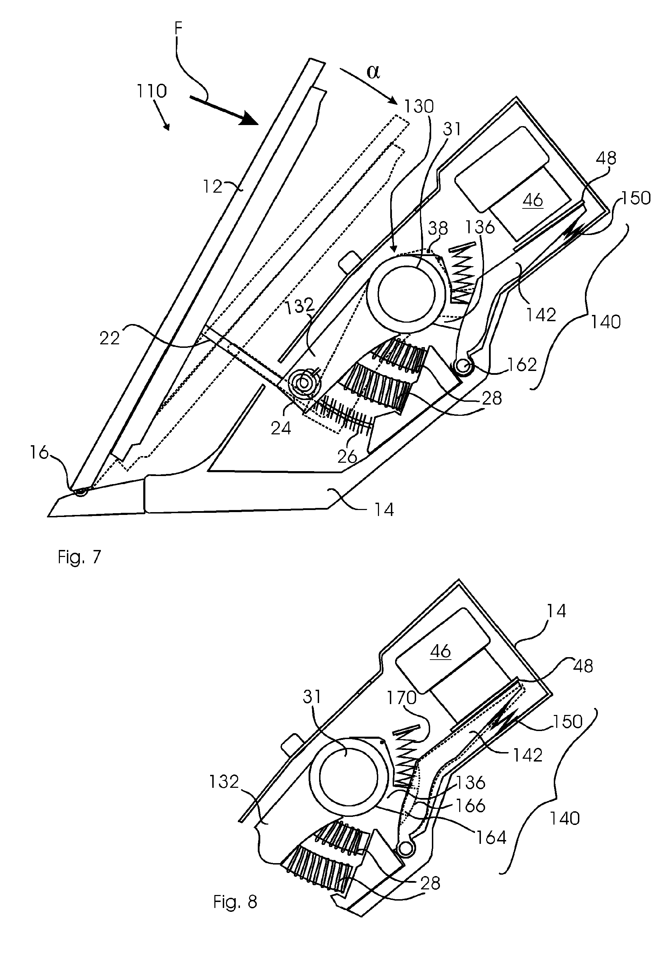

Fig. 7- 12, 13a, 13b beziehen sich auf eine zweite Ausführungsform einer Pedalvorrichtung 110. Wie für den Fachmann ersichtlich stimmen eine Mehrzahl von Elementen der Pedalvorrichtung 110 gemäß der zweiten Ausführungsform mit der oben beschriebenen ersten Ausführungsform überein, so dass auf eine erneute Erläuterung dieser Elemente hier verzichtet werden soll. Stattdessen wird sich die folgende Beschreibung auf die Unterschiede zwischen den Ausführungsformen konzentrieren. Dabei sind gleiche Elemente mit gleichen Bezugszeichen versehen.

Bei der Pedalvorrichtung 110 gemäß der zweiten Ausführungsform ist die passive Funktionalität dieselbe wie bei der ersten Ausführungsform, d. h. durch die Pedalplatte 12 wird über den Kopplungshebel 22 der Drehhebel 130 verstellt, dessen Stellung durch einen induktiven Sensor 24, 26 ermittelt wird, und auf den die Rückstellfedern 28 wirken.

Dabei ist allerdings der Drehhebel 130 in diesem Fall anders, nämlich dreiteilig ausgebildet, wie nachfolgend näher erläutert wird.

Die Pedalvorrichtung 110 weist eine ansteuerbare Kraftvorrichtung 140 auf, mit der die Pedalkennlinie gezielt verändert werden kann. Wie die Krafteinheit 40 der ersten Ausführungsform wirkt auch die Krafteinheit 140 auf den Drehhebel 130.

Allerdings ist die Wirkung der Krafteinheit 140 nicht wie bei der ersten Ausführungsform auf einen Bereich der Kennlinie ab einer festen Eingriffsstellung α_{E} beschränkt, sondern die Eingriffswirkung je nach Ansteuerung kann an verschiedenen Stellen der Kennlinie, d. h. verschiedenen Eingriffsstellungen α_{E} wirksam werden. Hierfür weist die Krafteinheit 140 wie in Fig. 7, Fig. 8 dargestellt einen Andruckhebel 142 auf, der in einem Gelenk 162 am Gehäuse 14 schwenkbar angelenkt ist. An dem Andruckhebel 142 ist eine ferromagnetische Scheibe 48 vorgesehen, die so vor einem Hubmagneten 46 platziert ist, dass sie bei Bestromung des Hubmagneten 46 von diesem angezogen wird. Eine Andruckfeder 150 von vergleichsweise geringer Federkraft hält den Andruckhebel 142 mit der Scheibe 48 im Bereich vor dem Hubmagneten 46.

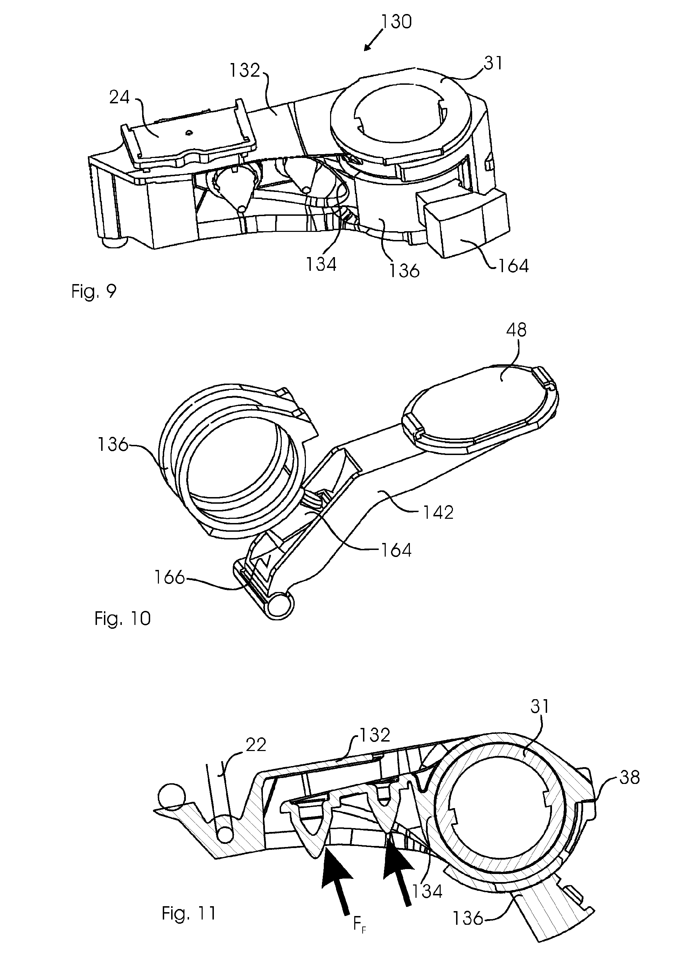

Der Drehhebel 130 umfasst, wie nachfolgend mit Bezug auf Fig. 9-12 genauer erläutert wird, drei Teile, nämlich einen Betätigungshebel 132, eine Rückstellkrafthebel 134 und einen Eingriffshebel 136.

Der Eingriffshebel 136 bildet einen Fuß 164 aus, der mit einer am Andruckhebel 142 gebildeten Reibfläche 166 in Eingriff treten kann. Eine Eingriffsrückstellfeder 170 beaufschlagt den Eingriffshebel 136 wie in Fig. 8 gezeigt zu einer Drehung im Uhrzeigersinn, also entgegen der Betätigungsrichtung, wobei das andere Ende der Feder an einem gehäusefesten Teil gelagert ist.

Der Eingriff zwischen dem Fuß 164 des Eingriffshebels 136 und der Reibfläche 166 des Andruckhebels 142 erfolgt reibschlüssig. Dabei ergibt sich eine spürbare Reibungswirkung nur bei bestromten Hubmagneten 46, d. h. wenn durch die Kraftwirkung des Hubmagneten 46 auf die Scheibe 48 der Andruckhebel 142 an den Eingriffshebel 136 angedrückt wird. Bei ausgeschaltetem Hubmagneten 46 kann es durch die Wirkung der Feder 150 zu einem Kontakt kommen, aufgrund der geringen Federkraft entsteht so aber keine in der Bedienung der Pedalvorrichtung 110 spürbare Kraftwirkung.

In Fig. 9 ist der Drehhebel 130 mit seinen Bestandteilen in einer perspektivischen Darstellung gezeigt. Der Betätigungshebel 132 weist eine Halterung für ein Sensorelement 24 auf. Am Rückstellkrafthebel 134 sind die Aufnahmen für die Rückstellfedern 28 sichtbar. Der Fuß 164 des Eingriffshebels 136 weist einen Schuh als Überzug auf, der aus einem für die Reibpaarung mit der Reibfläche 166 geeignetes Material besteht.

Der Drehhebel 130 ist zur Drehung um das Achselement 31 angebracht, das wiederum als Hülse ausgebildet ist, die wie in Fig. 4 für die erste Ausführungsform gezeigt drehfest an einem einstückig mit dem Gehäuse 14 ausgebildeten Achsträger festlegbar ist.

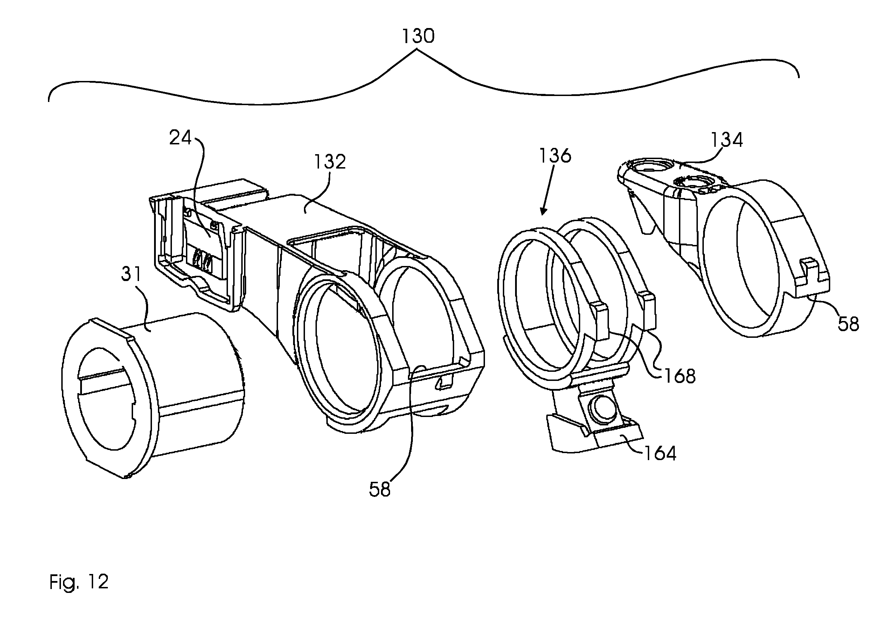

Wie aus der Explosionsdarstellung in Fig. 12 ersichtlich umgreift jeder der Bestandteile des Drehhebels 130, nämlich der Betätigungshebel 132, der Rückstellkrafthebel 134 und der Eingriffshebel 136 jeweils das Achselement 31. Damit sind die Hebel um die Mittelachse des Achselements 31 herum drehbar. Zusätzlich sind die Hebel schwenkbar gegeneinander gelagert.

Der Rückstellkrafthebel 134 ist wie beim ersten Ausführungsbeispiel mit einer Anlagekante 56 versehen, die mit einer entgegengesetzten Anlagekante 58 am Betätigungshebel 132 eine Schwenklagerung 38 bildet. Auch der Eingriffshebel 136 bildet Anlagekanten 168 aus, die in der Montageposition an der Anlagekante 58 des Betätigungshebels 132 anliegen und somit ebenfalls eine Schwenklagerung 38 ausbilden. Somit sind sowohl der Eingriffshebel 136 als auch der Rückstellkrafthebel 134 schwenkbar gegenüber dem Betätigungshebel 132 gelagert, wobei die Schwenkachse 38 der Lagerung im Abstand von der Drehachse des Drehhebels 130 angeordnet ist. Die Schwenklagerung 38 wird dabei durch einseitige Anlage gebildet, kann also Kräfte bzw. Drehmomente nur in einer Richtung übertragen.

Somit ergibt sich bei entgegengesetzter Kraftwirkung auf den Betätigungshebel 132 einerseits und den Rückstellkrafthebel 134 sowie den Eingriffshebel 136 andererseits auch beim Drehhebel 130 gemäß der zweiten Ausführungsform eine Klemmwirkung gegenüber dem Achseelement 31. Wegen der Kopplung als einseitige Anlage wirkt die Klemmwirkung dabei nur in einer Richtung, nämlich entgegen einer weiteren Betätigung.

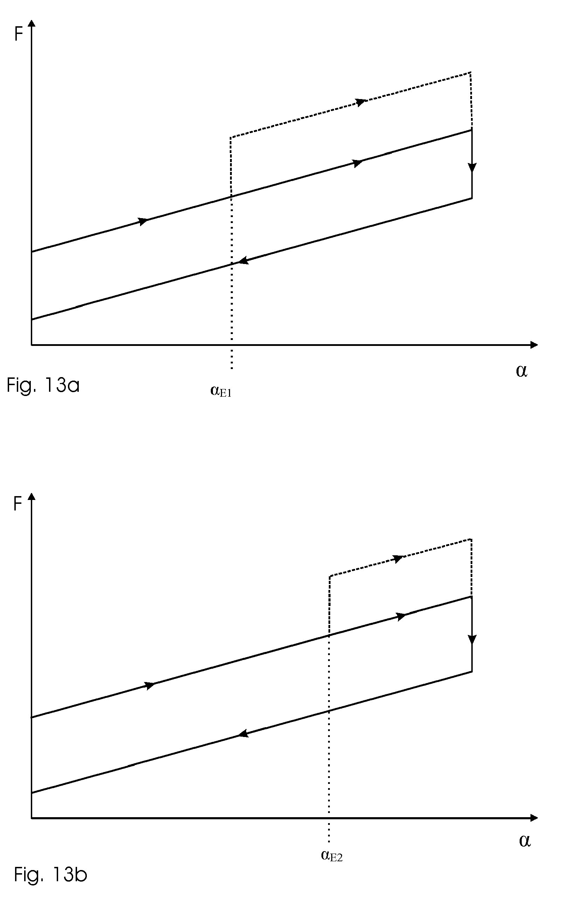

Die Wirkung des durch die Rückstellfedern 28 beaufschlagten Rückstellkrafthebels 136 bewirkt dabei in der Pedalkennlinie der Pedalvorrichtung 110, wie sie in Fig. 13a, 13b dargestellt ist, den passiven, mit einer durchgezogenen Linie dargestellten Teil. Dabei steigt die Betätigungskraft F über die Betätigung α linear an. Durch die Reibungswirkung ergibt sich die dargestellte Hysterese.

Eine Einwirkung oder Veränderung der passiven Kennlinie kann wie bereits angedeutet durch geeignete Ansteuerung der Krafteinheit 140 erreicht werden. Um ab einer frei wählbaren Auslenkung α_{E1} eine erhöhte Gegenkraft zu erzeugen, wird durch geeignete Ansteuerung, bspw. in der ECU des Kraftfahrzeugs, der vom Sensor 24, 26 gelieferte Wert überwacht und beim Überschreiten der Eingriffsschwelle α_{E1} der Hubmagnet 46 bestromt.

Die Magnetkraft auf die ferromagnetische Scheibe 48 führt zu einer geringfügigen Schwenkbewegung des Andruckhebels 142 und somit zu einem reibschlüssigen Eingriff zwischen dem Fuß 164 des Eingriffshebels 136 und der Reibfläche 166 am Andruckhebel 142.

Wenn der Eingriff hergestellt ist, muss für eine fortgesetzte Betätigung der Pedalplatte 12 einerseits die Reibung zwischen dem Fuß 146 des Eingriffshebels 136 und der Reibfläche 166 überwunden werden, so dass die notwendige Betätigungskraft F bereits hierdurch erhöht ist.

Zusätzlich ergibt sich eine erhöhte Klemmwirkung, weil die Reibungskraft an der Reibpaarung 164, 166 den Eingriffshebel 136 im Uhrzeigersinn beaufschlagt und so den Eingriffshebel 136 gegenüber dem Betätigungshebel 132 verspannt. Hierdurch wird die Wirkung der Reibung am Achselement 31 weiter erhöht.

Wie schon bei der ersten Ausführungsform wird die Wirkung der Eingriffskraft, die hier der Kraft an der Reibpaarung 164, 166 entspricht, durch die Spannwirkung und hieraus folgende erhöhte Reibung erheblich verstärkt. So kann wie aus Fig. 13a, 13b ersichtlich eine ab Wirkung des Eingriffs bei der Auslenkung α_{E1} deutlich erhöhte Betätigungskraft erzielt werden. Auch hier bildet sich eine Kraftstufe.

Je nach Ansteuerung kann die erhöhte Betätigungskraft an verschiedenen Eingriffsstellen Eingriffshebel α_{E1} (Fig. 13a) bzw. α_{E2} (Fig. 13b) wirksam werden, d. h. die Kraftstufe ist für den Benutzer bei unterschiedlichen Pedalstellungen spürbar.

Dabei ist bei der zweiten Ausführungsform ebenso wie bei der ersten Ausführungsform sichergestellt, dass eine Kraftwirkung der Krafteinheit 40, 140 stets nur entgegen der Betätigungsrichtung wirkt und selbst bei einer Fehlansteuerung nicht in Betätigungsrichtung wirken kann, so dass ein Niederhalten der Pedalplatte 12 ausgeschlossen ist. Bei der ersten Ausführungsform wird dies durch die einseitige Anlage zwischen der Nase 36 und der Spitze 52 des Stößels 42 gewährleistet. Bei der zweiten Ausführungsform wird dies erreicht durch die Aufteilung des Drehhebels 130 in drei separat voneinander bewegliche Hebel 132, 134, 136, die an der Schwenklagerung 38 nur durch einseitige Anlage gekoppelt sind. Der Betätigungshebel 132 lässt sich daher unabhängig von der Stellung des Eingriffshebels stets zurückstellen, und auch die Rückstellbewegung des Rückstellkrafthebels 134 ist vom Eingriffshebel 132 entkoppelt. Der Eingriffshebel 136 wird dabei separat durch die Feder 170 zurückgestellt. Selbst bei vollständiger Blockierung des Eingriffshebels 136 aber ist durch die unabhängige Beweglichkeit des Rückstellkrafthebels 134 und Betätigungshebels 132 stets die Rückstellung der Pedalplatte 12 sichergestellt.

## Patentansprüche

1. Pedalvorrichtung mit
- einem Pedalelement (12), das gegenüber einem Basiselement (14) auslenkbar ist,
- einem Drehelement (30, 130), das mit dem Pedalelement (12) so gekoppelt ist, dass eine Auslenkung des Pedalelements (12) zu einer Drehung des Drehelements (30,130) um ein Achselement (31) führt,
- wobei das Drehelement (30, 130) mindestens zwei Teile (32, 34; 132, 134, 136) umfasst, die an einer Schwenklagerung (38) mit einer Schwenkachse außerhalb der Drehachse des Drehelements (30, 130) gegeneinander gelagert sind, wobei das Achselement (31) dazwischen einklemmbar ist,
- und einer ansteuerbaren Krafteinheit (40,140) zum Aufbringen einer Eingriffskraft (F_{F}) an einem beweglichen Betätiger (42, 142), wobei der Betätiger (42, 142) in Eingriff mit einem der Teile (34, 136) des Drehelements (130) bringbar ist, um abhängig von der Eingriffskraft (F_{F}) eine Klemmung des Achselements (31) zu bewirken.

2. Pedalvorrichtung nach Anspruch 1, bei der
- das Pedalelement (12) über einen Hebel (22) mit einem ersten Teil (32, 132) des Drehelements (30, 130) gekoppelt ist,
- und ein Pedalsensor (24, 26) vorgesehen ist, um die Stellung des ersten Teils (32, 132) zu ermitteln.

3. Pedalvorrichtung nach einem der vorangehenden Ansprüche, bei der
- ein Teil des Drehelements (30, 130) einen Hebel zur Aufnahme der Eingriffskraft (F_{F}) aufweist.

4. Pedalvorrichtung nach einem der vorangehenden Ansprüche, bei der
- die Krafteinheit (40, 140) ein elektromagnetisches Aktorelement (46) aufweist, das durch elektrische Ansteuerung mindestens betreibbar ist in einem ersten Zustand, in dem die Eingriffskraft (F_{F}) auf das Drehelement (30, 130) wirken kann, und einen zweiten Zustand, in dem die Eingriffskraft (F_{F}) nicht auf das Drehelement (30, 130) wirkt.

5. Pedalvorrichtung nach Anspruch 4, bei der
- die Krafteinheit (40, 140) einen Hubmagneten (46) aufweist, der im ersten Zustand stärker bestromt wird als im zweiten Zustand.

6. Pedalvorrichtung nach einem der vorangehenden Ansprüche, bei der
- die Krafteinheit (40) eine Eingriffsfeder (44) aufweist, mit der die Eingriffskraft (F_{F}) aufgebracht wird.

7. Pedalvorrichtung nach einem der vorangehenden Ansprüche, bei der
- die Krafteinheit (40) ein Stößelelement (42) aufweist, um an einer Eingriffsposition (α_{E}) mit einem Teil (34) des Drehelements (30) in Eingriff zu treten, so dass ab der Eingriffsposition (α_{E}) eine weitere Betätigung des Pedalelements (12) eine Verschiebung des Stößelelements (42) bewirkt.

8. Pedalvorrichtung nach Anspruch 7, bei der
- das Stößelelement (42) mit einem ansteuerbaren Aktorelement (46) so gekoppelt ist, dass durch eine Ansteuerung des Aktorelements (46) eine zur Verschiebung des Stößelelements (42) notwendige Kraft variiert werden kann.

9. Pedalvorrichtung nach einem der vorangehenden Ansprüche, bei der
- die Krafteinheit (140) einen Hebel (142) aufweist, der durch ein ansteuerbares Aktorelement (46) zu einem kraftschlüssigen Eingriff mit einem Teil des Drehelements (130) beaufschlagt werden kann.

10. Pedalvorrichtung nach einem der vorangehenden Ansprüche, bei der
- die Krafteinheit (140) eine Reibfläche (166) zum reibschlüssigen Eingriff mit einem Teil (136) des Drehelements (130) aufweist.

11. Pedalvorrichtung nach einem der vorangehenden Ansprüche, bei der
- das Drehelement (130) mindestens einen ersten, zweiten und dritten Teil (132,134,136) umfasst, die das Achselement (31) jeweils mindestens teilweise umgreifen und um eine Schwenkachse (38) außerhalb des Achselements (31) gegeneinander gelagert sind,
- wobei der erste Teil (132) mit dem Pedalelement (12) gekoppelt ist,
- der zweite Teil (134) mit mindestens einer Rückstellkraftfeder (28) gekoppelt ist,
- und der dritte Teil (136) einen Hebel zum Eingriff mit der Krafteinheit (140) aufweist.

12. Pedalvorrichtung nach Anspruch 11, bei der
- der dritte Teil (136) an der Schwenkachse (38) gegen den ersten Teil (132) gelagert ist.

13. Pedalvorrichtung nach Anspruch 11 oder 12, bei der
- am dritten Teil (136) eine Positionsrückstellfeder (170) vorgesehen ist.

14. Verfahren zur Erzeugung einer ansteuerbaren Gegenkraft in einer Pedalvorrichtung (10, 110), bei dem
- ein Pedalelement (12), das gegenüber einem Basiselement (14) auslenkbar ist, mit einem Drehelement (30, 130) so gekoppelt ist, dass eine Auslenkung des Pedalelements (12) zu einer Drehung des Drehelements (30, 130) um ein Achselement (31) führt,
- wobei das Drehelement (30, 130) mindestens zwei Teile (32, 34; 132, 134, 136) umfasst, die um eine Schwenkachse (38) außerhalb der Drehachse des Drehelements (30, 130) schwenkbar gegeneinander gelagert sind,
- und wobei eine Krafteinheit (40, 140) zum Aufbringen einer Eingriffskraft (F_{F}) an einem beweglichen Betätiger (42, 142) angesteuert wird, wobei der Betätiger (42, 142) in Eingriff mit einem der Teile des Drehelements (30, 130) gebracht wird, um abhängig von der Eingriffskraft (F_{F}) eine Klemmung des Achselements (31) zwischen Teilen (32, 34; 132, 134, 136) des Schwenkelements (30, 130) zu bewirken.
